# EUROPÄISCHE PATENTSCHRIFT

(11) **EP 4 196 331 B1**
(45) Veröffentlichungstag und Bekanntmachung des Hinweises auf die Patenterteilung: **07.08.2024**
(21) Anmeldenummer: 21762018.6
(22) Anmeldetag: 11.08.2021
(51) Int. Cl.: B29C 45/00, B29C 45/17, H05K 5/06, B29L 31/34

(54) **ELEKTRISCHER KOMPONENTENTRÄGER**
ELECTRIC COMPONENT CARRIER
PORTEUR DE COMPOSANT ÉLECTRIQUE

(30) Priorität: 12.08.2020 DE 102020121179
(43) Veröffentlichungstag der Anmeldung: 21.06.2023
(73) Patentinhaber: Pollmann International GmbH, 3822 Karlstein (AT)
(72) Erfinder: SCHMIDT, Roman, 3813 Dietmanns (AT); DORR, Alexander, 3822 Karlstein an der Thaya (AT); GREULBERGER, Andreas, 3820 Raabs an der Thaya (AT)
(74) Vertreter: Dilg, Haeusler, Schindelmann Patentanwaltsgesellschaft mbH
(86) Internationale Anmeldenummer: PCT/EP2021/072347
(87) Internationale Veröffentlichungsnummer: WO 2022/034122

(56) Entgegenhaltungen:
- DE-A1- 102011 004 694
- US-A1- 2010 033 885
- US-A1- 2018 299 239
- US-A1- 2020 147 843

## Beschreibung

### Technisches Gebiet

Die vorliegende Erfindung betrifft eine Vorrichtung zum feuchtigkeitsdichten Einhausen einer elektronischen Komponente. Ferner wird ein Verfahren zum Herstellen der Vorrichtung beschrieben.

### Hintergrund der Erfindung

Elektronische Komponenten, wie beispielsweise Mikroschalter, Drahtwiderstände, MEM's, ICs mit SMD oder DIL Anschlüssen haben häufig starr angebaute elektrische Verbindungen aus Massivleitern. Für gewisse Anwendungen müssen diese elektronischen Komponenten auf oder in einem Komponententräger befestigt werden, wobei die elektrischen Verbindungen hermetisch vom Umgebungsklima isoliert werden müssen. Insbesondere sollen eine hohe Wasserfestigkeit und Feuchtigkeitsbeständigkeit erreicht werden. Dokument DE 10 2011 004694 A1 beschreibt eine Schaltungsanordnung umfassend einen Schaltungsträger und elektronische Bauelemente.

Es hat sich aber unter bestimmten Bedingungen gezeigt, dass wenn elektronische Komponenten in einer Kavität eines Spritzgussteils montiert werden und das Spritzgussteil faserverstärkt ist, bei bestimmten Spritzgussmaterialien die Vergussmasse nicht mehr genügend am Komponententräger haften. Ferner kann es zu Feuchtigkeitseintragungen führen, welche insbesondere bei den elektrischen Verbindungen zu Korrosions- und Isolationsproblemen führen.

### Darstellung der Erfindung

Es ist eine Aufgabe der vorliegenden Erfindung, eine robuste Vorrichtung zum feuchtigkeitsdichten Einhausen der Leiter und einer elektronischen Komponente zu schaffen.

Diese Aufgabe wird durch eine Vorrichtung zum feuchtigkeitsdichten Einhausen einer elektronischen Komponente sowie einem Verfahren zum Herstellen der Vorrichtung gemäß den unabhängigen Ansprüchen gelöst.

Gemäß einem ersten Aspekt der Erfindung wird eine Vorrichtung zum feuchtigkeitsdichten Einhausen einer elektronischen Komponente und deren Leiter beschrieben. Die Vorrichtung weist ein faserverstärktes, spritzgegossenes Trägerelement auf, welches eine Kavität zum Aufnehmen der elektronischen Komponente aufweist und aus einem thermoplastischen Kunststoff besteht. Ferner weist die Vorrichtung die elektronische Komponente, welche in der Kavität angeordnet ist, auf. Ferner weist die Vorrichtung eine Füllmasse auf, welche am Trägerelement und der elektronischen Komponente anhaftet und zwischen der elektronischen Komponente und dem Trägerelement angeordnet ist. Ferner weist die Vorrichtung einen elektrischen Leiter auf, welcher mit der elektronischen Komponente und dem Trägerelement gekoppelt ist und zumindest bereichsweise von der Füllmasse umgeben ist. Das Trägerelement enthält Gasblasen, welche in weniger als 10 mm von der Füllmasse entfernt sind.

Gemäß einem weiteren Aspekt der Erfindung wird ein Verfahren zum Herstellen einer oben beschriebenen Vorrichtung zum feuchtigkeitsdichten Einhausen eines Leiters einer elektronischen Komponente beschrieben. Das Verfahren weist ein Spritzgießen eines faserverstärkten Trägerelements auf, welches eine Kavität zum Aufnehmen der elektronischen Komponente aufweist und aus einem thermoplastischen Kunststoff besteht. Die elektronische Komponente wird in der Kavität angeordnet und ein elektrischer Leiter wird mit der elektronischen Komponente und dem Trägerelement gekoppelt. Eine Füllmasse wird zwischen der elektronischen Komponente und dem Trägerelement gefüllt, wobei die Füllmasse am Trägerelement und der elektronischen Komponente anhaftet und der elektrische Leiter zumindest bereichsweise von der Füllmasse umgeben wird. Das Trägerelement enthält Gasblasen, welche in weniger als 10 mm von der Füllmasse entfernt sind.

Die elektronischen Komponenten können beispielsweise Mikroschalter, Drahtwiderstände, MEM's (Micro-Electro-Mechanical Systems) oder integrierte Schaltkreise (IC, mit SMD oder DIL Anschlüssen) sein. Unter dem Begriff "elektronischer Komponente" werden auch elektrische Komponenten, wie beispielsweise Schmelzsicherungen und dergleichen, verstanden. In der Vorrichtung wird insbesondere eine elektronische Komponente in eine entsprechende Kavität des Trägerelements eingesetzt. Ferner können mehrere elektronische Komponenten in eine entsprechende Kavität des Trägerelements eingesetzt werden oder das Trägerelement kann mehrere Kavitäten aufweisen, in welchen jeweils eine elektronische Komponente einsetzbar ist.

Die elektronische Komponente weist ferner einen elektrischen Leiter auf, welcher zur Energieübertragung oder Signalübertragung insbesondere an die Umgebung dienen kann. Die elektrischen Leiter sind häufig starr angebaute elektrische Verbindungen aus Massivleitern. Mit dem Begriff "elektronische Komponenten" werden zusammenfassend verschiedene elektrische, elektromechanische oder elektronische Komponenten verstanden, die in dem Trägerelement, welches als Spritzgussgehäuse ausgebildet ist, eingebettet sind. Insbesondere sind die elektronischen Komponenten zur Kontaktierung mit massivleiterbasierenden Verbindungen ausgebildet, welche mit entsprechenden Leitern im Trägerelement elektrisch leitend gekoppelt werden können.

Das Trägerelement ist insbesondere ein faserverstärktes, spritzgegossenes Bauteil, welches über eine ausreichende Festigkeit und Härte verfügt. Das Trägerelement weist die Kavität auf, in welcher die elektronische Komponente (oder in einer beispielhaften Ausführungsform mehrere elektronische Komponenten) eingebettet werden können. Das Trägerelement und dessen Kavität können dabei derart ausgebildet sein, dass zumindest zwei Seiten einer elektronischen Komponente abgedeckt werden können. So kann beispielsweise eine Kavität mittels eines V- förmigen oder L- förmigen Trägerelements gebildet werden. Die Kavität kann ferner derart ausgebildet werden, dass zumindest eine Seite der Komponente frei bleibt und nicht von einem Bereich des Trägerelements abgedeckt wird. In einer weiteren beispielhaften Ausführungsform kann die Kavität eine Öffnung aufweisen, in welcher die elektronische Komponente eingeführt werden kann, wobei diese Öffnung im Anschluss durch ein Abdeckelement verschlossen werden kann.

Das Trägerelement ist insbesondere faserverstärkt, um eine hohe Festigkeit zu gewährleisten. Dabei können Faserverstärkungsmaterialien eingesetzt werden, die eingebettet in eine Polymermatrix einen Faserverbundstoff ergeben.

Die Füllmasse (Vergussmasse) umhüllt zumindest teilweise die elektronische Komponente und bildet eine Befestigung der elektronischen Komponente in der Kavität des Trägerelements aus. Als Vergussmasse können insbesondere giessbare Kunststoffe auf PUR (Polyurethan) oder Epoxidbasis eingesetzt werden. Die Füllmasse haftet insbesondere an der elektronischen Komponente an und ist zwischen der elektronischen Komponente und dem Trägerelement angeordnet, um die elektronische Komponente entsprechend zu befestigen.

Bei spritzgegossenen faserverstärkten Trägerelementen entstehen häufig glatte Oberflächen, die ein Anhaften der Füllmasse erschweren. Mit dem Ansatz der vorliegenden Erfindung liegen Gasblasen im Trägerelement in einem Bereich vor, welcher weniger als 10 mm von der Füllmasse entfernt sind. Mit anderen Worten wird ein Bereich geschaffen, welcher sich von einer Kontaktfläche (Oberfläche) des Trägerelements mit der Füllmasse mindestens 10 mm (Millimeter) oder mehr ins Innere des Trägerelements erstreckt. Dabei kann der Abstand von 10 mm beispielsweise entlang einer Senkrechten zur Kontaktfläche von der Kontaktfläche ins Innere des Trägerelements gemessen werden.

Aufgrund des Vorliegens von Gasblasen bzw. Kavitäten entstehen einerseits an der Kontaktfläche entsprechende Vertiefungen an den Oberflächenbereichen mit offenen Gasblasen. Zudem wird durch das Einbringen von Gasblasen die Orientierung und Ausbildung der Fasern beeinträchtigt, sodass nach dem Aushärten des Trägerelements Faserelemente bzw. Faserenden an der Kontaktfläche vorliegen.

Dies führt zu einer verbesserten Anhaftung der Füllmasse. (Glas-) Faserstoppeln und Mikrokavitäten (offene Gasblasen) werden von der Vergussmasse (Füllmasse) als mechanische Verklemmung zur verbesserten Anhaftung utilisiert. Diese damit erzielte verbesserte Haftung der Vergussmasse erlaubt so auch eine besonders gute Dichtheit in Bezug auf Feuchtigkeitsmigration. Somit erlaubt die vorliegende Erfindung eine feuchtigkeitsbeständige Einbettung von elektronischen Komponenten in Kavitäten, welche von einem faserverstärkten Komponententräger gebildet werden, wobei die Kavitäten mit einer Füllmasse ausgefüllt werden. Mittels der Gasblasen an der Kontaktfläche zwischen dem Trägerelement und der Füllmasse wird eine selbstorganisierende Oberflächenveränderung des Spritzgussteils (Trägerelements) insbesondere bei Beigabe von Gas, insbesondere Stickstoff, im Spritzgießprozess erreicht, welche zur Haftungsverbesserung führt.

Zusammenfassend kann die Einbringung von Gasblasen im Bereich der Kontaktfläche des Trägerelements zu Ergebnissen führen, welche einen hohen Bezug zur Haftung der Vergussmasse haben. Zunächst brechen aufgrund der oberflächennahen Gasblasen Fasern, insbesondere Glasfasern, an der Oberfläche auf, an welchen sich die Vergussmasse verankern kann. Ferner bilden sich herausstehende (Glas)faserstoppeln, an welchen sich die Füllmasse verankern kann. Zudem werden Mikrokavitäten gebildet, in welche sich die Vergussmasse hineinverklemmen kann. Außerdem verbessert sich die Anhaftung der Vergussmasse an den polaren Faserbestandteilen. Darüber hinaus kann die Füllmasse an einer durch die Oberflächenstruktur der Kontaktfläche entstehende größere Oberfläche, welche durch selbstorganisierende Mikrostrukturierung zwischen dem Trägerelement und der Füllmasse entstanden ist, besser anhaften. Dabei sind die Rauheiten bzw. Oberflächenvergrößerung aufgrund der Ausbildung von oberflächennahen Gasblasen und aufgrund der Formung in einem Spritzgusseinsatz immer nur in eine Ebene, d.h. von der Formoberfläche weg ins Innere des Trägerelements angelegt, was haptisch immer noch den Eindruck einer planen Oberfläche vermittelt.

Gemäß einer weiteren beispielhaften Ausführungsform liegt der Gasblasenanteil zwischen 1 Vol.-% (Volumenprozent) und 30 Vol.-%, insbesondere zwischen 2 Vol.-% und 10 Vol.-%. Damit wird die Festigkeit des Trägerelements durch das Einbringen von Gasblasen nur unwesentlich reduziert, sodass trotz Vorliegen der Gasblasen in dem Trägerelement eine ausreichende Stabilität gewährleistet ist. Das Porenvolumen vermindert auch den Materialeisatz. Allerdings, in der Regel, mit steigendem Porenanteil, auf Kosten der Bauteilfestigkeit. Ein Porenvolumen von 1-30 Vol.-% wird daher angestrebt (insbesondere wurden gute Ergebnisse im Bereich 2 Vol.-% -10 Vol.-% erreicht) um die mechanischen Eigenschaften zu optimieren.

Gemäß einer weiteren beispielhaften Ausführungsform weisen die Gasblasen eine Porengröße von 10 bis 50 µm (Mikrometern), insbesondere 20 bis 40 µm, auf. Es hat sich herausgestellt, dass sich insbesondere bei einer entsprechenden Größe der Gasblasen eine Selbstorganisation der Faserausrichtung und eine Mikrostrukturierung der Kontaktfläche ausbildet. Dabei wird die Porengröße durch den größten Abstand zwischen zwei gegenüberliegenden Randpunkten in einer Gasblase bestimmt.

Gemäß einer weiteren beispielhaften Ausführungsform weist das Trägerelement einen Anteil von Polypropylen PP (z.B. Thermofil^{®} HPF610X99) auf oder besteht insbesondere mehrheitlich (z.B. ausschließlich) aus Polypropylen. Zudem oder alternativ kann das Trägerelement Anteile aus Thermoplastischem Polyurethan TPU, Acrylnitril-Butadien-Styrol-Copolymere ABS, Polycarbonat PC und/oder Polyoxymethylen POM, Polyamid PA und/oder Polystyrol PS aufweisen.

Gemäß einer weiteren beispielhaften Ausführungsform durchdringt der elektrische Leiter die Oberfläche des Trägerelements derart, dass diese Durchdringung in einer Kontaktfläche von dem Trägerelement zur Füllmasse liegt. Die Gasblasen sind näher als 10 mm, insbesondere näher als 4 mm, insbesondere näher als 2 mm, zum elektrischen Leiter ausgebildet. Durch die Steifigkeit des Leiters (insbesondere eines massiven Leiters) werden die in der Abkühlphase expandierenden Gasblasen vermehrt weg vom Leiter expandieren. Dies erzeugt in dem Bereich eine Region von besonders ausgeprägten Stoppeln. Dadurch ist in dem Bereich die Haftung der Füllmasse besonders hoch und es werden besonders gute Langzeitfeuchtigkeitsschutzeigenschaften erzielt. Besonders gute Ergebnisse wurden erzielt, wenn Gasblasen näher als 20 mm, insbesondere näher als 8 mm, besonders bevorzugt näher als 3 mm zum Leiter liegen.

Gemäß einer weiteren beispielhaften Ausführungsform enthalten die Gasblasen Inertgase, insbesondere Stickstoff. Bei dem Einblasen von Inertgas und insbesondere Stickstoff während des Spritzgießvorgangs kann eine gute Verteilung der Gasblasen erzielt werden. Inertgase reagieren kaum mit den Faserelementen oder mit dem Material des Trägerelements, sodass eine gute Verträglichkeit mit den umgebenden Materialien gegeben ist.

Gemäß einer weiteren beispielhaften Ausführungsform weist die Kontaktfläche des Trägerelements in der Kontaktzone zu der Füllmasse freiliegende Verstärkungsfasern und/oder mikrokristalline Kavitäten auf. Wie eingangs beschrieben führt dies zu einer verbesserten Anhaftung der Füllmasse. (Glas-) Faserstoppeln und Mikrokavitäten (Gasblasen) werden von der Vergussmasse (Füllmasse) als mechanische Verklemmung zur verbesserten Anhaftung utilisiert. Diese damit erzielte verbesserte Haftung der Vergussmasse erlaubt so auch eine gute Dichtheit in Bezug auf Feuchtigkeitsmigration.

Gemäß einer weiteren beispielhaften Ausführungsform weist das Trägerelement zumindest zwei Bereiche mit unterschiedlichen Konzentrationen einer Gasblasendichte auf. Beispielsweise kann ein erster Bereich, welcher beispielsweise den Bereich von der Kontaktfläche in das Innere des Trägerelements darstellt, eine höhere Dichte an Gasblasen aufweisen als ein zweiter Bereich, welcher beispielsweise an dem ersten Bereich angrenzt und von der Kontaktfläche beabstandet ist. So kann beispielsweise der erste Bereich, welcher an der Kontaktfläche angrenzt und den höheren Gasblasenanteil aufweist bevorzugt die Mikrokavitäten und die freiliegenden Faserbestandteile ausbilden. Der tiefer liegende zweite Bereich mit einer geringeren Dichte an Gasblasen kann beispielsweise zu einer höheren Dichte des Trägerelements und somit zu einer beispielsweise größeren Beständigkeit und Härte des Trägerelements führen. Somit können gezielt Eigenschaften des Trägerelements eingestellt werden.

Insbesondere über Variation der Temperatur, des Drucks und der Injektionsgeschwindigkeit des Materials (welches mit entsprechenden Gasanteilen vermischt ist) des Trägerelements in eine Spritzgussform können gezielt die oben beschriebenen Bereiche mit einer höheren oder einer niedrigeren Gasblasendichte in einem Trägerelement eingestellt werden.

Gemäß einer weiteren beispielhaften Ausführungsform weist das Trägerelement in einer Kontaktfläche zu der Füllmasse in unterschiedlichen Richtungen entlang der Kontaktfläche unterschiedliche Haftreibungsbeiwerte auf. Dabei wird die Eigenschaft der Ausrichtung von Fasern in Flussrichtung ausgenützt. Das heißt durch geeigneten Formenbau kann im Spritzgussteil eine gewünschte Flussrichtung der Polymer-Fasermischung erreicht werden. Durch die nachfolgende Expansion des Gases entstehen an der Oberfläche Faserteile mit einer Vorzugsausrichtung. Dies wiederum führt zu einem vermehrten Zurückhalt des Füllmittels in dieser Richtung nach dem Prinzip eines höheren Widerstandes, d.h. bildhaft gesprochen wie beim "gegen den Bart streichen". Sind beispielsweise die Faserenden an der Kontaktfläche in eine Faserrichtung orientiert, so ist der Haftreibungsbeiwert entgegen dieser Faserrichtung höher als in der Faserrichtung. Entsprechend sind die Haftreibungsbeiwerte an der Kontaktfläche orthogonal zu der Faserrichtung kleiner als entgegen der Faserrichtung.

Gemäß einer weiteren beispielhaften Ausführungsform weist das Trägerelement eine Kontaktfläche zu der Füllmasse auf, wobei die Kontaktfläche strukturiert ist und insbesondere eine wellenförmige Oberfläche und/oder eine geriffelte Oberfläche aufweist. Dadurch wird insbesondere die Kontaktfläche des Trägerelements zu der Füllmasse sowie beispielsweise die Rauigkeit erhöht. Dies führt zu einer stärkeren Verbindung zwischen dem Trägerelement und der Füllmasse.

Gemäß einer weiteren beispielhaften Ausführungsform weist die Kavität des Trägerelements eine Öffnung auf, durch welche die elektronische Komponente mit einem hervorragenden Bereich in die Umgebung ragt. Zwischen dem hervorragenden Bereich und dem Trägerelement liegt zumindest ein Bereich mit Füllmasse derart vor, dass ein Innenbereich der Vorrichtung flüssigkeitsdichtend von einer Umgebung der Vorrichtung abgedichtet ist. Somit wird in einem Abstandsbereich zwischen dem Trägerelement und der elektronischen Komponente, in welchem Abstandsbereich eine Öffnung zur Umgebung vorliegt, das Abdichten mittels dem Füllmaterial vorgesehen, so dass eine Abdichtung, insbesondere gegenüber Flüssigkeiten, zwischen dem weiteren Innenvolumen der Vorrichtung und der Umgebung bereitgestellt wird. Eine Abdichtung mittels eines direkten Kontakts zwischen dem Trägerelement und der elektronischen Komponente ist oftmals nur schwer zu erreichen. Eine Füllung in diesem Abstandsbereich mit der Füllmasse erhöht die Dichtwirkung. Dadurch wird insbesondere eine Wasserdichtheit nach IP 67 ermöglicht.

Gemäß einer weiteren beispielhaften Ausführungsform weist das Trägerelement zumindest ein Positionselement auf, an welchem die elektronische Komponente anliegt und positionierbar ist. Das Positionselement ist beispielsweise ein Steg oder eine Kante bzw. Stufe, um einen Sitz bzw. eine Auflage für die elektronische Komponente zu bilden. Das Positionselement ist beispielsweise integral mit dem Trägerelement ausgebildet und kann in einem gemeinsamen Spritzgussverfahren hergestellt werden. In einer beispielhaften Ausführungsform ist das Positionselement ein Führungszapfen, eine Führungsschiene oder eine Führungsbahn, an welchem ein korrespondierendes Koppelelement (d. h. beispielsweise ein Gehäuseteil) der elektronischen Komponente koppelbar ist.

Gemäß einer weiteren beispielhaften Ausführungsform weist das Trägerelement ein Polymer mit einen Schmelzflussindex (Melt Volume-flow Rate, MFR) kleiner 5 g/10min, insbesondere kleiner 1 g/10min, aufweist. Der Schmelzflussindex dient zur Charakterisierung des Fließverhaltens (Formmassenprüfung) eines Thermoplasten bei bestimmten Druck- und Temperaturbedingungen.

Erfindungsgemäß wird während des Spritzgussvorgangs ein Gas, insbesondere Stickstoff, injiziert. Die Injektionen von Gas in schmelzflüssige Polymere im Zuge von Spritzgussvorgängen, bewirkt den Effekt, dass durch die feinteilige Aufteilung ("Lösung") von Gas in der Polymerschmelze es zu einer deutlichen Viskositätserniedrigung kommt. Die Fließeigenschaften der Schmelze werden daher verbessert und auch kleine Querschnitte in der Kavität werden leichter durchströmt, bzw. erreicht.

Beim Spritzguss ist ein bedeutender Nachdruck, d.h. ein statischer Druck nach der Injektion in die Spritzgussform, solange aufrecht zu erhalten, bis dadurch die Polymerschmelze auch die entferntesten Stellen der Spritzgussform erreicht. Darüber hinaus muss eine allfällige Schrumpfung durch Volumenreduktion im Zuge der Erstarrung, kompensiert werden. Die Wirkung dieses Nachdruckes nimmt mit der Entfernung vom Einspritzpunkt progressiv ab, sodass zur Erreichung des Produktionszieles, insbesondere bei komplexen, dünnwandigen Teilen bzw. Komponententrägern und bei Verwendung von Polymeren niedrigem MFR (beispielsweise PP mit MFR unter 5 g/10min, insbesondere unter 1 g/10min) oder hochgefüllten Blends (beispielsweise mineralgefüllten Thermoplasten, erschwerend bei fasergefüllten Polymeren) und/ oder einer Kombination beider Erschwernisse, unverhältnismäßig Große Aggregate eingesetzt werden müssen, die mit dem eigentlichen Schussgewicht nicht mehr korrelieren, also in keinem vernünftigen Verhältnis zur Einspritzmenge stehen. Dadurch, dass sich erfindungsgemäß kleine Gasblasen in der Polymerschmelze verteilen, wird deren gleichmäßiger statische Druck in alle Richtungen wirksam und unterstützt die Erreichung der Zielvorgabe. Somit kann selbst bei Polymeren mit einem niedrigen MFR der Nachdruck minimiert werden, sodass ein kleinerer maschineller Aufwand notwendig ist und eine gleichmäßigere Füllung die Produkteigenschaften begünstigt.

Gemäß einer weiteren beispielhaften Ausführungsform weist das Trägerelement einen Faseranteil in Gewichtsprozent zwischen 5% und 60%, insbesondere zwischen 10% und 50 %, und weiter insbesondere zwischen 15% und 40% auf.

Gemäß einer weiteren beispielhaften Ausführungsform weist das Trägerelement Verstärkungsfasern auf bestehend aus Mineralfasern, insbesondere Silikate, Glas, Basalt, Asbest, Wollastonit, Carbonfasern, insbesondere Kohlenstoffnanoröhren, Polymerfasern, insbesondere Polyamidfaser, Polyimidfasern, Polyester, Polyolefine, Polyesteramide, Aramide, insbesondere Kevlar(r)^{®} und/oder Naturfasern, insbesondere Cellulose, Baumwolle, Viskose, Lyocell^{®}, Holz, Hanf, Seide.

Gemäß einer weiteren beispielhaften Ausführungsform weisen die Verstärkungsfasern Langfasern mit einer Länge von 1 mm (Millimeter) bis 20 mm, insbesondere von 5 mm bis 15 mm auf.

Gemäß einer weiteren beispielhaften Ausführungsform weist die Füllmasse Polyurethan oder Epoxidharz auf, beispielsweise Fermadur A & B.

Gemäß einer weiteren beispielhaften Ausführungsform ist der elektrische Leiter ein Massivleiter, wobei der Massivleiter insbesondere einen Querschnitt von 0,1 mm² bis 10 mm² aufweist. Ein Massivleiter besteht insbesondere aus einem (monolithischen) Volldraht oder Vollblech. Insbesondere unterscheidet sich ein Massivleiter von dickeren Litzen (welche jeweils aus mehreren Einzelleitern gebildet werden) insbesondere mit einem Querschnitt von mehr als 16 mm². Massivleiter bilden eine hohe Stabilität und eine gute Leitfähigkeit aus.

Gemäß einer weiteren beispielhaften Ausführungsform verläuft der elektrische Leiter zum externen Anschluss von der elektronischen Komponente durch das Trägerelement, wobei der elektrische Leiter mit der elektronischen Komponente mittels Lötens, Schweißens, Steckens insbesondere einer Schneidklemmverbindung und/ oder Klemmens elektronisch gekoppelt ist.

Gemäß einer weiteren beispielhaften Ausführungsform ist die elektronische Komponente ein Mikroschalter, ein Aktor, ein Widerstand oder ein Sensor, insbesondere ein Temperatursensor oder ein Abstandsschalter.

Gemäß einer weiteren beispielhaften Ausführungsform wiegt das Trägerelement unter 1 kg.

Gemäß einer weiteren beispielhaften Ausführungsform des Verfahrens weist der Schritt des Spritzgießens auf ein Mischen eines Materials des Trägerelements mit einem Inertgas, insbesondere Stickstoff, zum Bilden der Gasblasen und ein Einbringen des Materials mit den Gasblasen in eine Spritzgussform.

Die Herstellvorrichtung weist beispielsweise einen Trichter auf, welcher das Rohmaterial des Trägerelements (zum Beispiel Granulat) einem Extruder zuführt. In dem Extruder kann das Rohmaterial erwärmt und durchgemengt werden, sodass eine homogene viskose Masse entsteht. Die viskose Masse wird durch den Extruder zu einer Düse, insbesondere einer Nadelverschlussdüse, befördert, durch welche Düse das viskose Material in eine Spritzgussform mit einer vorbestimmten Temperatur, Druck und Volumenstrom eingespritzt werden kann. In einem Bereich des Extruders wird ferner ein Gasinjektor gekoppelt, welcher ein Gas, beispielsweise Inertgas, insbesondere Stickstoff, zum Bilden der Gasblasen in das viskose Material einbringt. In dem Extruder wird die viskose Masse mit dem injizierten Gas vermengt, sodass ein homogenes Gas/ viskose Masse Gemisch entsteht. In diesem Gemisch liegen die Gasblasen homogen vor.

Durch die Düse wird das homogene Gas/ viskose Masse-Gemisch in eine Spritzgussform eingespritzt. Aufgrund der Variation des Einspritzdrucks, der Temperatur, sowie des Massenstroms, mit welchen das homogene Gas/ viskose Masse-Gemisch eingespritzt wird, können verschiedene Bereiche mit unterschiedlichen Dichten an Gasblasen und insbesondere unterschiedliche Größen von Gasblasen in dem Trägerelement generiert werden.

Gemäß einer weiteren beispielhaften Ausführungsform weist eine Kontaktfläche des Trägerelements zu der Füllmasse eine größere Rauheit auf als eine entsprechende Oberfläche der Spritzgussform, wobei insbesondere die Oberfläche eine Mikrostrukturierung aufweist, welche mit der Füllmasse zumindest teilweise gefüllt wird, besonders bevorzugt, dass die Füllmasse an Faserstoppeln anhaften kann.

Die größere Rauheit der Kontaktfläche des Trägerelements wird insbesondere durch die Mikrostrukturierung durch die Gasblasen und die freigelegten Fasern an der Kontaktfläche gebildet. Dies bedeutet, dass selbst bei einer glatten Oberfläche der Spritzgussform, welche vorteilhaft ist, um ein Anhaften des zugewiesenen Materials zu verhindern, eine rauere Kontaktfläche des Trägerelements entsteht, um eine verbesserte Haftung mit der Füllmasse bereitzustellen.

Gemäß einer weiteren beispielhaften Ausführungsform des Verfahrens wird bei dem Schritt des Mischens ein Inertgas, insbesondere Stickstoff, mit einem Gasdruck zwischen 30 bar und 230 bar, insbesondere zwischen 80 bar und 160 bar, eingebracht, sodass das Inertgas in einer Scher- und Mischzone in dem Material des Trägerelements eingeschossen wird. In der Scher- Mischzone insbesondere des Extruders wird der oben beschriebene Gasinjektor angeschlossen. Aufgrund der Variation des Drucks und beispielsweise auch der Temperatur, mit welcher das Gas in die viskose Masse im Extruder eingeströmt wird, kann eine Größe der Gasblasen sowie eine Anzahl bzw. Dichte der Gasblasen im viskosen Material eingestellt werden.

Gemäß einer weiteren beispielhaften Ausführungsform liegt in dem Schritt des Einbringens des Materials des Trägerelements in die Spritzgussform ein Schussgewicht von maximal 1 kg vor. Unter Schussgewicht wird unter Fachleuten die maximale Einschussmenge (in Gramm) der Kunststoffschmelze inklusive aller Nebenmaterialen (z.B. Fasern) innerhalb eines Schusses einer Spritzgussmaschine verstanden, welche eine Spritzgussform vollständig füllt.

Gemäß einer weiteren beispielhaften Ausführungsform liegt in dem Schritt des Mischens das Inertgas, insbesondere zumindest zeitweise, in einem superkritischen Zustand vor. In dem superkritischen Zustand liegt das Gas sowohl gasförmig als auch flüssig vor. Dies führt zu einer verbesserten Verteilung des Gases innerhalb der viskosen Masse des Trägerelements. Nach Verlassen des superkritischen Zustands ist das Gas wieder vollständig gasförmig, sodass sich dann die Gasblasen in der viskosen Masse des Trägerelements bilden.

Mit der vorliegenden Erfindung kann durch eine Viskositätserniedrigung und einer die Verwirbelung der Faseranteile in der Materialmatrix des Trägerelements durch die Anwesenheit von leichtbeweglichen Gasporen, Faseranteile und Faserenden bis an die Oberfläche, also bis zur Formoberfläche (Kontaktfläche), vordringen und eine raue und dennoch plane Oberfläche des Trägerelements generieren.

Die erfindungsgemäße Lösung der Vergussmassenverankerung (zwischen Trägerelement und Füllmasse) mittels Glasfaserstoppeln führt zu einer langfristig guten elektrischen Verbindung für die in das Spritzgussteil (Trägerelement) eingebaute Elektro- oder Elektronikkomponente. Insbesondere kann ein oxydationsrelevantes Aufreißen von Kaltverschweißungen bei druckbasierenden Verbindungsmechanismen vermieden werden.

Durch das erfindungsgemäße Freilegen von Fasern, insbesondere Glasfasern, an der Oberfläche (Kontaktfläche) können insbesondere Spritzgussteile wie das Trägerelement mit besonders hohem Faseranteil realisiert werden, da mit zunehmendem Faseranteil auch die Menge der an der Oberfläche freiliegenden Fasern ansteigt. Wenn beim Spritzgiessen eine Faser-Kunststoffschmelze in ein längliches Spritzgussteil eingespritzt wird, erfolgt vom Einspritzpunkt weg eine Ausrichtung der Fasern in eben dieser Längsrichtung, was zusätzlich zur gezielten Gestaltung einer Oberfläche mit Glasfaserstoppeln verwendet werden kann. So lässt sich ein besonders hoher Faseranteil von 5% bis 60%, insbesondere von 10% bis 50%, und mit guten Ergebnissen im Bereich von 15% bis 40% erreichen. (Angaben sind Gewichtsprozente).

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine schematische Darstellung einer Vorrichtung, in welcher ein elektrischer Leiter zwischen einer elektronischen Komponente und einem Trägerelement angeordnet ist, gemäß einer beispielhaften Ausführungsform der vorliegenden Erfindung.
Fig. 2 zeigt eine Schnittdarstellung von elektrischen Leitern, die ein Trägerelement durchdringen, gemäß einer beispielhaften Ausführungsform der vorliegenden Erfindung.
Fig. 3 zeigt eine schematische Darstellung einer Herstellvorrichtung gemäß einer beispielhaften Ausführungsform der vorliegenden Erfindung.
Fig. 4 zeigt eine schematische Darstellung einer REM Aufnahme einer Kontaktfläche eines Trägerelements mit Gasblasen gemäß einer beispielhaften Ausführungsform der vorliegenden Erfindung.
Fig. 5 zeigt eine schematische Darstellung einer REM Aufnahme einer Kontaktfläche eines Trägerelements ohne Gasblasen.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

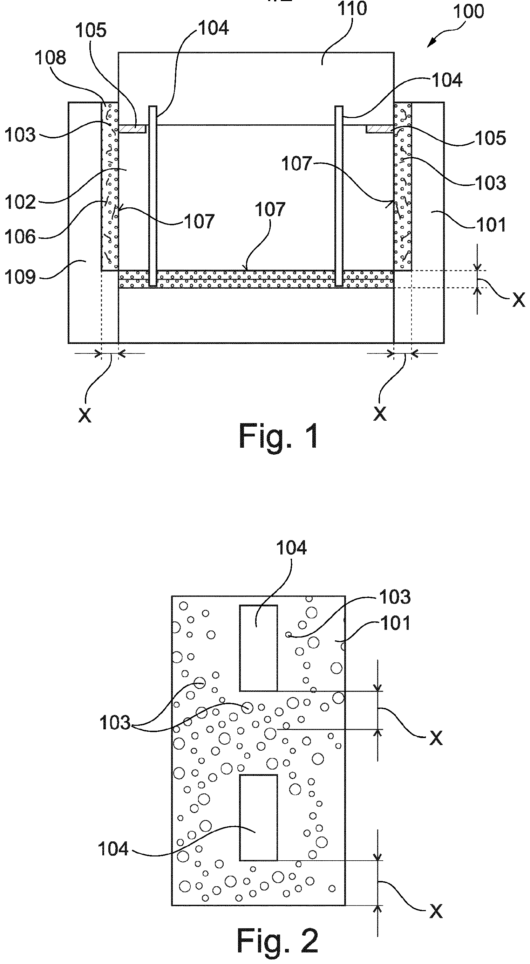

**Fig. 1** zeigt eine schematische Darstellung einer Vorrichtung 100, in welcher ein elektrischer Leiter 104 zwischen einer elektronischen Komponente 110 und einem Trägerelement 101 angeordnet ist. Die Vorrichtung 100 ist ausgebildet den Leiter 104 und zumindest teilweise die elektronischen Komponente 110 feuchtigkeitsdicht einzuhausen. Die Vorrichtung 100 weist ein faserverstärktes, spritzgegossenes Trägerelement 101 auf, welches eine Kavität zum Aufnehmen der elektronischen Komponente 110 aufweist und aus einem thermoplastischen Kunststoff besteht. Ferner weist die Vorrichtung 100 die elektronische Komponente 110, welche in der Kavität angeordnet ist, auf. Eine Füllmasse 102 haftet am Trägerelement 101 und der elektronischen Komponente 110 an und ist zwischen der elektronischen Komponente 110 und dem Trägerelement 101 angeordnet. Ferner weist die Vorrichtung 100 einen elektrischen Leiter 104 auf, welcher mit der elektronischen Komponente 110 und dem Trägerelement 101 gekoppelt ist und zumindest bereichsweise von der Füllmasse 102 umgeben ist. Das Trägerelement 101 enthält Gasblasen 103, welche in weniger als x=10 mm von der Füllmasse 102 entfernt sind.

Der elektrische Leiter 104 dient zur Energieübertragung oder Signalübertragung insbesondere zwischen der elektronischen Komponente 110 und der Umgebung. Die elektrischen Leiter 104 sind häufig starr angebaute elektrische Verbindungen aus Massivleitern.

Das Trägerelement 101 ist insbesondere ein faserverstärktes, spritzgegossenes Bauteil, welches über eine ausreichende Festigkeit und Härte verfügt. Das Trägerelement 101 weist die Kavität auf, in welcher die elektronische Komponente 110 eingebettet ist. Das Trägerelement 101 und dessen Kavität können dabei derart ausgebildet sein, dass zumindest zwei Seiten einer elektronischen Komponente 110 abgedeckt werden können. So kann beispielsweise eine Kavität mittels eines V- förmigen oder L- förmigen Trägerelements 101 gebildet werden. Die Kavität kann ferner derart ausgebildet werden, dass zumindest eine Seite der Komponente 110 frei bleibt und nicht von einem Bereich des Trägerelements 101 abgedeckt wird.

Das Trägerelement 101 ist insbesondere faserverstärkt, um eine hohe Festigkeit zu gewährleisten. Dabei können Faserverstärkungsmaterialien eingesetzt werden, die eingebettet in eine Polymermatrix einen Faserverbundstoff ergeben.

Die Füllmasse 102 (Vergussmasse) umhüllt zumindest teilweise die elektronische Komponente 110 und bildet eine Befestigung der elektronischen Komponente 110 in der Kavität des Trägerelements 101 aus. Die Füllmasse 102 haftet insbesondere an der elektronischen Komponente 110 an und ist zwischen der elektronischen Komponente 110 und dem Trägerelement 101 angeordnet, um die elektronische Komponente 110 entsprechend zu befestigen.

In einem Randbereich des Trägerelements 101, welcher nahe einer Kontaktfläche 107 mit der Füllmasse 102 ist, liegen Gasblasen 103 im Trägerelement 101 vor. Die Gasblasen 104 sind dabei weniger als 10 mm von der Füllmasse entfernt. Mit anderen Worten wird ein Bereich geschaffen, welcher sich von einer Kontaktfläche (Oberfläche) 107 des Trägerelements mit der Füllmasse 102 mindestens 10 mm (Millimeter) oder mehr ins Innere des Trägerelements 101 erstreckt. Dabei können die 10 mm beispielsweise entlang als Abstand x entlang einer Senkrechten zur Kontaktfläche 107 von der Kontaktfläche 107 ins Innere des Trägerelements 101 gemessen werden.

Aufgrund des Vorliegens von Gasblasen 103 bzw. Kavitäten entstehen einerseits an der Kontaktfläche 107 entsprechende Vertiefungen an den Oberflächenbereichen mit offenen Gasblasen 103. Zudem wird durch das Einbringen von Gasblasen 103 die Orientierung und Ausbildung der Fasern 106 beeinträchtigt, sodass nach dem Aushärten des Trägerelements 101 Faserelemente 106 bzw. Faserenden an der Kontaktfläche 107 vorliegen.

Dies führt zu einer verbesserten Anhaftung der Füllmasse 102. (Glas-) Faserstoppeln und Mikrokavitäten (Gasblasen) werden von der Vergussmasse 102 (Füllmasse) als mechanische Verklemmung zur verbesserten Anhaftung utilisiert. Mittels der Gasblasen 103 an der Kontaktfläche 107 zwischen dem Trägerelement 101 und der Füllmasse 102 wird eine selbstorganisierende Oberflächenveränderung des Spritzgussteils (Trägerelements 101) insbesondere bei Beigabe von Gas, insbesondere Stickstoff, im Spritzgießprozess erreicht, welche zur Haftungsverbesserung führt.

Der Gasblasenanteil insbesondere in einem ersten Bereich 108 des Trägerelements kann zwischen 1 Vol.-% (Volumenprozent) und 30 Vol.-%, eingestellt werden. Damit wird die Festigkeit des Trägerelements 101 durch das Einbringen von Gasblasen 103 nur unwesentlich reduziert, sodass trotz Vorliegen der Gasblasen 103 in dem Trägerelement 101 eine ausreichende Stabilität gewährleistet ist.

Die Kontaktfläche 107 des Trägerelements 101 in der Kontaktzone zu der Füllmasse 102 weist freiliegende Verstärkungsfasern 106 und/oder mikrokristalline Kavitäten aufweist. Wie eingangs beschrieben führt dies zu einer verbesserten Anhaftung der Füllmasse 102. (Glas-) Faserstoppeln und Mikrokavitäten (Gasblasen 103) werden von der Vergussmasse (Füllmasse 102) als mechanische Verklemmung zur verbesserten Anhaftung utilisiert.

Das Trägerelement 101 weist beispielsweise zumindest zwei Bereiche 108, 109 mit unterschiedlichen Konzentrationen einer Gasblasendichte auf. Beispielsweise kann ein erster Bereich 108, welcher beispielsweise der Bereich von der Kontaktfläche 107 in das Innere des Trägerelements darstellt, eine höhere Dichte an Gasblasen 103 aufweisen als ein zweiter Bereich 109, welcher beispielsweise an dem ersten Bereich 108 angrenzt und von der Kontaktfläche 107 beabstandet ist. So kann beispielsweise der erste Bereich 108, welcher an der Kontaktfläche 107 angrenzt und den höheren Gasblasenanteil aufweist bevorzugt die Mikrokavitäten und die freiliegenden Faserbestandteile ausbilden. Der tiefer liegende zweite Bereich 109 mit einer geringeren Dichte an Gasblasen 103 kann beispielsweise zu einer höheren Dichte des Trägerelements 101 und somit zu einer beispielsweise größeren Beständigkeit und Härte des Trägerelements 101 führen. Somit können gezielt Eigenschaften des Trägerelements 101 eingestellt werden.

Die Kontaktfläche 107 kann neben der Mikrostrukturierung auch gröber strukturiert sein und insbesondere eine wellenförmige Oberfläche und/oder eine geriffelte Oberfläche aufweisen. Dadurch wird insbesondere die Kontaktfläche 107 des Trägerelements 101 zu der Füllmasse 102 sowie beispielsweise die Rauigkeit erhöht. Dies führt zu einer stärkeren Verbindung zwischen dem Trägerelement 101 und der Füllmasse 102.

Wie in der beispielhaften Ausführungsform in Fig. 1 kann die Kavität des Trägerelements 101 eine Öffnung aufweisen, durch welche die elektronische Komponente 110 mit einem hervorragenden Bereich in die Umgebung ragt. Zwischen dem hervorragenden Bereich und dem Trägerelement 110 liegt zumindest ein Bereich mit Füllmasse 102 derart vor, dass ein Innenbereich der Vorrichtung 100 flüssigkeitsdichtend von einer Umgebung der Vorrichtung abgedichtet ist. Somit wird in einem Abstandsbereich zwischen dem Trägerelement 101 und der elektronischen Komponente 110, in welchem Abstandsbereich eine Öffnung zur Umgebung vorliegt, das Abdichten mittels dem Füllmaterial 102 vorgesehen, so dass eine Abdichtung, insbesondere gegenüber Flüssigkeiten, zwischen dem Innenvolumen der Vorrichtung 100 und der Umgebung bereitgestellt wird.

Das Trägerelement 101 weist ferner zumindest ein Positionselement 105 auf, an welchem die elektronische Komponente 110 anliegt und positionierbar ist. Das Positionselement 105 ist beispielsweise ein Steg oder eine Kante bzw. Stufe, um einen Sitz bzw. eine Auflage für die elektronische Komponente 110 zu bilden. Das Positionselement 105 ist beispielsweise integral mit dem Trägerelement 101 ausgebildet und kann in einem gemeinsamen Spritzgussverfahren hergestellt werden.

**Fig. 2** zeigt eine Schnittdarstellung von elektrischen Leitern 104, die ein Trägerelement 101 durchdringen. Der elektrische Leiter ist ein Massivleiter, wobei der Massivleiter insbesondere einen Querschnitt von 0,1 mm² bis 10 mm² aufweist. Ein Massivleiter besteht insbesondere aus einem (monolithischen) Volldraht oder Vollblech.

Der elektrische Leiter 104 verläuft zum externen Anschluss von der elektronischen Komponente 110 durch das Trägerelement 101, wobei der elektrische Leiter 104 mit der elektronischen Komponente 110 mittels Lötens, Schweißens, Steckens insbesondere einer Schneidklemmverbindung und/ oder Klemmens elektronisch gekoppelt ist.

Der elektrische Leiter 104 durchdringt die Oberfläche des Trägerelements 101 derart, dass diese Durchdringung in einer Kontaktfläche 107 von dem Trägerelement 101 zur Füllmasse 102 liegt. Die Gasblasen 103 sind, zumindest bereichsweise, näher als 10 mm zum elektrischen Leiter 104 im Trägerelement 101 ausgebildet.

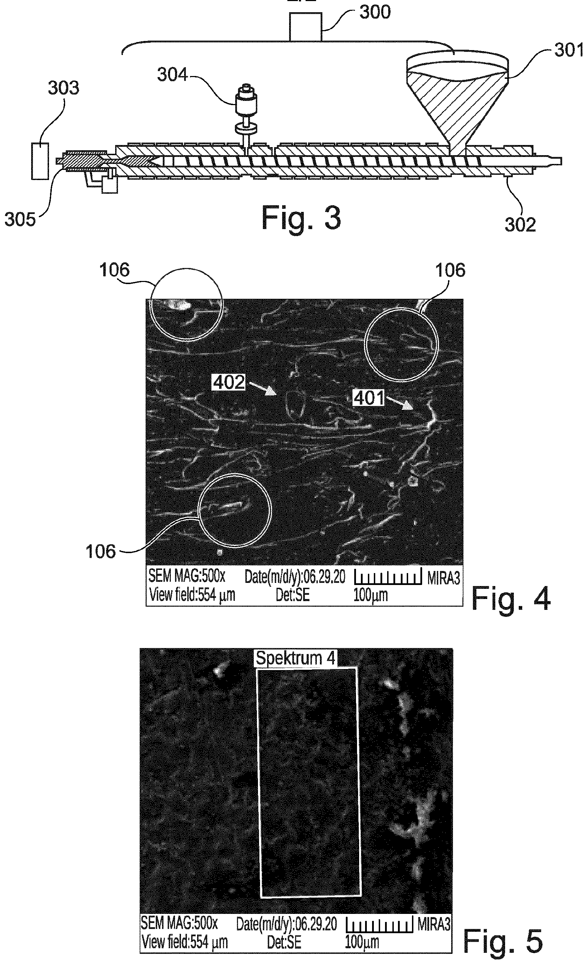

**Fig. 3** zeigt eine schematische Darstellung einer Herstellvorrichtung 300 gemäß einer beispielhaften Ausführungsform der vorliegenden Erfindung. Die Herstellvorrichtung 300 weist beispielsweise einen Trichter 301 auf, welcher das Rohmaterial des Trägerelements 101 (zum Beispiel Granulat) einem Extruder 302 zuführt. In dem Extruder 302 kann das Rohmaterial erwärmt und durchgemengt werden, sodass eine homogene viskose Masse entsteht. Die viskose Masse wird durch den Extruder 302 zu einer Düse 305, insbesondere einer Nadelverschlussdüse, befördert, durch welche Düse 305 das viskose Material in eine Spritzgussform 303 mit einer vorbestimmten Temperatur, Druck und Volumenstrom eingespritzt werden kann. In einem Bereich des Extruders 302 wird ferner ein Gasinjektor 304 gekoppelt, welcher ein Gas, beispielsweise Inertgas, insbesondere Stickstoff, zum Bilden der Gasblasen 103 in das viskose Material einbringt. In dem Extruder 302 wird die viskose Masse mit dem injizierten Gas vermengt, sodass ein homogenes Gas/ viskose Masse Gemisch entsteht. In diesem Gemisch liegen die Gasblasen 103 homogen vor.

Durch die Düse 305 wird das homogene Gas/ viskose Masse-Gemisch in die Spritzgussform 303 eingespritzt. Aufgrund der Variation des Einspritzdrucks, der Temperatur, sowie des Massenstroms, mit welchen das homogene Gas/ viskose Masse-Gemisch eingespritzt wird, können verschiedene Bereiche 108, 109 (siehe Fig. 1) mit unterschiedlichen Dichten an Gasblasen 103 und insbesondere unterschiedliche Größen von Gasblasen 103 in dem Trägerelement 101 generiert werden.

Gemäß einer weiteren beispielhaften Ausführungsform weist eine Kontaktfläche des Trägerelements zu der Füllmasse eine größere Rauheit auf als eine entsprechende Oberfläche der Spritzgussform, wobei insbesondere die Oberfläche eine Mikrostrukturierung aufweist, welche mit der Füllmasse zumindest teilweise gefüllt wird, besonders bevorzugt, dass die Füllmasse an Faserstoppeln anhaften kann.

Die größere Rauheit der Kontaktfläche des Trägerelements 101 wird insbesondere durch die Mikrostrukturierung durch die Gasblasen 102 und die freigelegten Fasern 106 an der Kontaktfläche gebildet. Dies bedeutet, dass selbst bei einer glatten Oberfläche der Spritzgussform 303, welche vorteilhaft ist, um ein Anhaften des zugewiesenen Materials zu verhindern, eine rauere Kontaktfläche 107 des Trägerelements 101 entsteht, um eine verbesserte Haftung mit der Füllmasse 102 bereitzustellen.

Mittels des Gasinjektors 304 wird Gas in den Extruder 302 zugeführt und ein Mischen eines Materials des Trägerelements 101 mit einem Inertgas, insbesondere Stickstoff, zum Bilden der Gasblasen ermöglicht. Dabei kann ein Gasdruck zwischen 30 bar und 230 bar, vorgesehen werden, sodass das Inertgas in einer Scher- und Mischzone in dem Material des Trägerelements 101 eingeschossen wird. Aufgrund der Variation des Drucks und beispielsweise auch der Temperatur, mit welcher das Gas in die viskose Masse im Extruder 302 eingeströmt wird, kann eine Größe der Gasblasen sowie eine Anzahl bzw. Dichte der Gasblasen 103 im viskosen Material eingestellt werden.

Beim Spritzguss ist ein bedeutender Nachdruck, d.h. ein statischer Druck nach der Injektion in die Spritzgussform 303, solange aufrecht zu erhalten, bis dadurch die Polymerschmelze auch die entferntesten Stellen der Spritzgussform 303 erreicht.

Insbesondere über Variation der Temperatur, des Drucks und der Injektionsgeschwindigkeit des Materials (welches mit entsprechenden Gasanteilen vermischt ist) des Trägerelements 101 in eine Spritzgussform 303 können gezielt die oben beschriebenen Bereich 108, 109 mit einer höheren oder einer niedrigen Gasblasendichte in einem Trägerelement 101 eingestellt werden.

**Fig. 4** zeigt eine schematische Darstellung einer REM Aufnahme einer Kontaktfläche 107 eines Trägerelements 101 mit Gasblasen 103 gemäß einer beispielhaften Ausführungsform der vorliegenden Erfindung. **Fig. 5** zeigt zum Vergleich eine schematische Darstellung einer REM Aufnahme einer Kontaktfläche 107 eines Trägerelements 101 ohne Gasblasen 103. In Fig. 4 sind innerhalb der Kreise herausstehenden Glasfasern 106 und die entstandenen Mikrokavitäten 401 an der Oberfläche mit Pfeilen gekennzeichnet.

Wird in einem Spritzgussverfahren Gasblasen 103 in dem Trägerelement 101 erzeugt, treten spätestens nach der Abkühlung des Trägerelements 101, Glasfasern 106 an die Oberfläche und/oder es entstehen Mikrokavitäten 401, wie in Fig. 4 dargestellt.

Diese Glasfaserstoppeln 106 und Mikrokavitäten 401 können von Füllmasse 102 als mechanische Verklemmung zur verbesserten Anhaftung utilisiert werden. Diese damit erzielte verbesserte Haftung der Füllmasse 102 erlaubt so auch eine besonders gute Dichtheit in Bezug auf Feuchtigkeitsmigration.

Im Vergleich zu einem faserverstärktem Trägerelement 101 ohne Gasblasen 103, wie in Fig. 5 dargestellt, treten bei einem faserverstärktem Trägerelement 101 mit Gasblasen 103 an der Oberfläche zum Liegen gekommene, im Zuge der Entformung nunmehr offene, in die Matrix hineinragende, Poren (Mikrokavitäten 401) auf. Dabei ist eine hohe Anzahl an offenen Poren bzw. Mikrokavitäten 401 zu erkennen im Vergleich zu dem in Fig. 5 dargestellten Trägerelement 101 ohne injizierte Gasblasen 103. Die parallel zur Oberfläche frei liegenden Mineralfaseranteile 106 weisen zudem polare Anteile zur verbesserten Haftung auf. Quer zur Oberfläche aufragende Mineralfaserenden 106 bieten zudem eine mechanische Verankerung und polare Anteile.

Ergänzend ist darauf hinzuweisen, dass "umfassend" keine anderen Elemente oder Schritte ausschließt und "eine" oder "ein" keine Vielzahl ausschließt. Die Erfindung ist im beigefügten Anspruchssatz definiert.

### Bezuaszeichenliste:

- 100: Vorrichtung
- 101: Trägerelement
- 102: Füllmasse
- 103: Gasblase
- 104: elektrischer Leiter/Massivleiter
- 105: Positionselement
- 106: Faser
- 107: Kontaktfläche
- 108: erster Gasblasenbereich
- 109: zweiter Gasblasenbereich

- 110: elektronische Komponente

- 300: Spritzgussvorrichtung
- 301: Zuführtrichter
- 302: Extruder
- 303: Spritzgussform
- 304: Gasinjektor
- 305: Düse

- 401: Mikrokavitäten

- x: Abstand Kontaktfläche

## Patentansprüche

1. Vorrichtung (100) zum feuchtigkeitsdichten Einhausen einer elektronischen Komponente (110), die Vorrichtung (100) aufweisend
ein faserverstärktes, spritzgegossenes Trägerelement (101), welches eine Kavität zum Aufnehmen der elektronischen Komponente (110) aufweist und aus einem thermoplastischen Kunststoff besteht,
die elektronische Komponente (110), welche in der Kavität angeordnet ist,
eine Füllmasse (102), welche am Trägerelement (101) und der elektronischen Komponente (110) anhaftet und zwischen der elektronischen Komponente (110) und dem Trägerelement (101) angeordnet ist,
einen elektrischen Leiter (104), welcher mit der elektronischen Komponente (110) und dem Trägerelement (101) gekoppelt ist und zumindest bereichsweise von der Füllmasse (102) umgeben ist,
wobei das Trägerelement (101) Gasblasen (103) enthält, welche in weniger als 10 mm von der Füllmasse (102) entfernt sind.

2. Vorrichtung (100) gemäß dem vorstehenden Anspruch,
wobei der Gasblasenanteil zwischen 1 Vol.-% und 30 Vol.-%, insbesondere zwischen 2 Vol.-% und 10 Vol.-%, liegt.

3. Vorrichtung (100) gemäß einem der vorstehenden Ansprüche,
wobei die Gasblasen eine Porengröße von 10 bis 50 Mikrometern aufweist.

4. Vorrichtung (100) gemäß einem der vorstehenden Ansprüche,
wobei das Trägerelement (101) einen Anteil von Polypropylen aufweist oder insbesondere mehrheitlich aus Polypropylen besteht
wobei insbesondere der elektrische Leiter (104) die Oberfläche des Trägerelements (101) derart durchdringt, dass diese Durchdringung in einer Kontaktfläche (107) von dem Trägerelement (101) zur Füllmasse (102) liegt, wobei die Gasblasen (103) näher als 10 mm, insbesondere näher als 4 mm, insbesondere näher als 2 mm, zum elektrischen Leiter (104) ausgebildet sind,
wobei die Gasblasen (103) insbesondere Inertgase, insbesondere Stickstoff, enthalten.

5. Vorrichtung (100) gemäß einem der vorstehenden Ansprüche,
wobei die Kontaktfläche (107) des Trägerelements (101) in der Kontaktzone zu der Füllmasse (102) freiliegende Verstärkungsfasern (106) und/oder mikrokristalline Kavitäten aufweist.

6. Vorrichtung (100) gemäß einem der vorstehenden Ansprüche,
wobei das Trägerelement (101) zumindest zwei Bereiche (108, 109) mit unterschiedlichen Konzentrationen einer Gasblasendichte aufweist.

7. Vorrichtung (100) einem der vorstehenden Ansprüche,
wobei das Trägerelement (101) in einer Kontaktfläche (107) zu der Füllmasse (102) in unterschiedlichen Richtungen entlang der Kontaktfläche (107) unterschiedliche Haftreibungsbeiwerte aufweist.

8. Vorrichtung (100) einem der vorstehenden Ansprüche, ferner aufweisend zumindest eines der folgenden Merkmale:
wobei das Trägerelement (101) eine Kontaktfläche (107) zu der Füllmasse (102) aufweist,
wobei die Kontaktfläche (107) strukturiert ist und insbesondere eine wellenförmige Oberfläche und/oder eine geriffelte Oberfläche aufweist,
wobei die Kavität des Trägerelements (101) eine Öffnung aufweist, durch welche die elektronische Komponente (110) mit einem hervorragenden Bereich in die Umgebung ragt,
wobei zwischen dem hervorragenden Bereich und dem Trägerelement (101) zumindest ein Bereich mit Füllmasse (102) derart vorliegt, dass ein Innenbereich der Vorrichtung (100) flüssigkeitsdichtend von einer Umgebung der Vorrichtung (100) abgedichtet ist,
wobei das Trägerelement (101) zumindest ein Positionselement (105) aufweist, an welchem die elektronische Komponente (110) anliegt und positionierbar ist, und
wobei das Positionselement (105) ein Führungszapfen, eine Führungsschiene oder eine Führungsbahn aufweist, an welchem ein korrespondierendes Koppelelement der elektronischen Komponente (110) koppelbar ist.

9. Vorrichtung (100) gemäß einem der vorstehenden Ansprüche, ferner aufweisend zumindest eines der folgenden Merkmale:
wobei das Trägerelement (101) ein Polymer mit einen Schmelzflussindex kleiner 5 g/10min, insbesondere kleiner 1 g/10min, aufweist,
wobei das Trägerelement (101) einen Faseranteil in Gewichtsprozent zwischen 5% und 60%, insbesondere zwischen 10% und 50 %, und weiter insbesondere zwischen 15% und 40% aufweist,
wobei das Trägerelement (101) Verstärkungsfasern (106) aufweist bestehend aus Mineralfasern, insbesondere Silikate, Glas, Basalt, Asbest, Wollastonit, Carbonfasern, insbesondere Kohlenstoffnanoröhren, Polymerfasern, insbesondere Polyamidfaser, Polyimidfasern, Polyester, Polyolefine, Polyesteramide, Aramide, insbesondere Kevlar und/oder Naturfasern, insbesondere Cellulose, Baumwolle, Viskose, Lyocell, Holz, Hanf, Seide, und
wobei die Verstärkungsfasern (106) Langfasern mit einer Länge von 1 mm bis 20mm, insbesondere von 5mm bis 15 mm aufweisen.

10. Vorrichtung (100) gemäß einem der vorstehenden Ansprüche, ferner aufweisend zumindest eines der folgenden Merkmale:
wobei die Füllmasse (102) Polyurethan oder Epoxidharz aufweist,
wobei der elektrische Leiter (104) ein Massivleiter ist,
wobei der Massivleiter insbesondere einen Querschnitt von 0,1 mm² bis 10 mm² aufweist,
wobei der elektrische Leiter (104) zum externen Anschluss von der elektronischen Komponente (110) durch das Trägerelement (101) verläuft,
wobei der elektrische Leiter (104) mit der elektronischen Komponente (110) mittels Lötens, Schweißens, Steckens insbesondere einer
Schneidklemmverbindung und/ oder Klemmens elektronisch gekoppelt ist,
wobei die elektronische Komponente (110) ein Mikroschalter, ein Aktor, ein Widerstand oder ein Sensor, insbesondere ein Temperatursensor oder ein Abstandsschalter ist, und
wobei das Trägerelement (101) unter 1 kg wiegt.

11. Verfahren zum Herstellen einer Vorrichtung (100) gemäß einem der Ansprüche 1 bis 10 zum feuchtigkeitsdichten Einhausen eines Leiters (104) einer elektronischen Komponente (110), das Verfahren aufweisend
Spritzgießen eines faserverstärkten Trägerelements (101), welches eine Kavität zum Aufnehmen der elektronischen Komponente (110) aufweist und aus einem thermoplastischen Kunststoff besteht,
Anordnen der elektronischen Komponente (110) in der Kavität angeordnet,
Koppeln eines elektrischen Leiters (104) mit der elektronischen Komponente (110) und dem Trägerelement (101),
Füllen einer Füllmasse (102) zwischen der elektronischen Komponente (110) und dem Trägerelement (101),
wobei die Füllmasse (102) am Trägerelement (101) und der elektronischen Komponente (110) anhaftet,
wobei der elektrische Leiter (104) zumindest bereichsweise von der Füllmasse (102) umgeben wird,
wobei das Trägerelement (101) Gasblasen (103) enthält, welche in weniger als 10 mm von der Füllmasse (102) entfernt sind.

12. Verfahren gemäß Anspruch 11,
wobei der Schritt des Spritzgießens aufweist
Mischen eines Materials des Trägerelements (101) mit einem Inertgas, insbesondere Stickstoff, zum Bilden der Gasblasen (103),
Einbringen des Materials mit den Gasblasen (103) in eine Spritzgussform (303),
wobei insbesondere eine Kontaktfläche (107) des Trägerelements (101) zu der Füllmasse (102) eine größere Rauheit aufweist als eine entsprechende Oberfläche der Spritzgussform (303),
wobei insbesondere die Oberfläche eine Mikrostrukturierung aufweist, welche mit der Füllmasse (102) zumindest teilweise gefüllt wird,
besonders bevorzugt, dass die Füllmasse an Faserstoppeln anhaften kann.

13. Verfahren gemäß Anspruch 12,
wobei bei dem Schritt des Mischens ein Inertgas, insbesondere Stickstoff, mit einem Gasdruck zwischen 30 bar und 230 bar, insbesondere zwischen 80 bar und 160 bar, eingebracht wird, sodass das Inertgas in einer Scher- und Mischzone in dem Material des Trägerelements (101) eingeschossen wird.

14. Verfahren gemäß Anspruch 12 oder 13,
wobei in dem Schritt des Einbringens des Materials des Trägerelements (101) in die Spritzgussform (303) ein Schussgewicht von maximal 1 kg vorliegt.

15. Verfahren gemäß einem der Ansprüche 12 bis 14,
wobei in dem Schritt des Mischens das Inertgas, insbesondere zumindest zeitweise, in einem superkritischen Zustand vorliegt.

## Claims

1. Device (100) for moisture-proofly housing an electronic component (110), the device (100) comprising
a fiber-reinforced, injection molded carrier element (101) which comprises a cavity for receiving the electronic component (110) and which consists of a thermoplastic plastic,
the electronic component (110) which is arranged in the cavity,
a filling material (102) which adheres to the carrier element (101) and to the electronic component (110) and which is arranged between the electronic component (110) and the carrier element (101),
an electrical conductor (104) which is coupled with the electronic component (110) and the carrier element (101), and which is at least in portions surrounded by the filling material (102),
wherein the carrier element (101) contains gas bubbles (103) which are spaced from the filling material (102) by less than 10 mm.

2. Device (100) according to the previous claim,
wherein the gas bubble portion is between 1 vol-% and 30 vol-%, in particular between 2 vol-% and 10 vol-%.

3. Device (100) according to one of the previous claims,
wherein the gas bubbles comprise a pore size of 10 to 50 micrometer.

4. Device (100) according to one of the previous claims,
wherein the carrier element (101) comprises a portion of polypropylene or mainly consists of polypropylene,
wherein in particular the electrical conductor (104) penetrates the surface of the carrier element (101), such that this penetration is in a contact surface (107) of the carrier element (101) to the filling material (102),
wherein the gas bubbles (103) are formed closer than 10 mm, in particular closer than 4 mm, in particular closer than 2 mm, to the electrical conductor (104),
wherein the gas bubbles (103) in particular contain inert gases, in particular nitrogen.

5. Device (100) according to one of the previous claims,
wherein the contact surface (107) of the carrier element (101) in the contact zone to the filling material (102) comprises exposed reinforcing fibers (106) and/or microcrystalline cavities.

6. Device (100) according to one of the previous claims,
wherein the carrier element (101) comprises at least two regions (108, 109) with different concentrations of a gas bubble density.

7. Device (100) according to one of the previous claims,
wherein the carrier element (101) in a contact surface (107) to the filling material (102) in different directions along the contact surface (107) comprises different static friction values.

8. Device (100) according to one of the previous claims, further comprising at least one of the following features:
wherein the carrier element (101) comprises a contact surface (107) to the filling material (102),
wherein the contact surface (107) is structured and in particular comprises a wave-shaped surface and/or a corrugated surface,
wherein the cavity of the carrier element (101) comprises an opening through which the electronic component (110) protrudes into the environment with a protruding region,
wherein between the protruding region and the carrier element (101) at least one region with filling material (102) is present, such that an inner region of the device (100) is liquid-proofly sealed from an environment of the device (100),
wherein the carrier element (101) comprises at least one positioning element (105) at which the electronic component (110) abuts and is positionable, and
wherein the positioning element (105) comprises a guiding pin, a guiding rail or a guiding trace, at which a corresponding coupling element of the electronic component (110) is couplable.

9. Device (100) according to one of the previous claims, further comprising at least one of the following features:
wherein the carrier element (101) comprises a polymer with a melt flow index lower than 5 g/10 min, in particular lower than 1 g/10 min,
wherein the carrier element (101) comprises a fiber portion in weight percent between 5 % and 60 %, in particular between 10 % and 50 %, and further in particular between 15 % and 40 %,
wherein the carrier element (101) comprises reinforcing fibers (106) consisting of mineral fibers, in particular silicates, glass, basalt, asbestos, wollastonite, carbon fibers, in particular carbon nanotubes, polymer fibers, in particular polyamide fibers, polyimide fibers, polyester, polyolefins, polyester amide, aramid, in particular Kevlar and/or natural fibers, in particular cellulose, cotton, viscose, lyocell, wood, hemp, silk, and
wherein the reinforcing fibers (106) comprise long fibers with a length from 1 mm to 20 mm, in particular from 5 mm to 15 mm.

10. Device (100) according to one of the previous claims, further comprising at least one of the following features:
wherein the filling material (102) comprises polyurethane or epoxy resin,
wherein the electrical conductor (104) is a massive conductor,
wherein the massive conductor in particular comprises a cross-section of 0.1 mm² to 10 mm²,
wherein the electrical conductor (104) extends through the carrier element (101) for an external connection of the electronic component (110),
wherein the electrical conductor (104) is electrically coupled with the electronic component (110) by soldering, welding, plugging, in particular of an insulation displacement connection, and/or clamping,
wherein the electronic component (110) is a microswitch, an actuator, a resistance, or a sensor, in particular a temperature sensor or a distance sensor, and
wherein the carrier element (101) weighs below 1 kg.

11. Method for manufacturing a device (100) according to one of the claims 1 to 10 for moisture-proofly housing a conductor (104) of an electronic component (110), the method comprising
injection molding a fiber-reinforced carrier element (101) which comprises a cavity for receiving the electronic component (110) and which consists of a thermoplastic plastic,
arranging the electronic component (110) in the cavity,
coupling an electrical conductor (104) with the electronic component (110) and the carrier element (101),
filling a filling material (102) between the electronic component (110) and the carrier element (101),
wherein the filling material (102) adheres to the carrier element (101) and to the electronic component (110),
wherein the electrical conductor (104) at least in portions is surrounded by the filling material (102),
wherein the carrier element (101) contains gas bubbles (103) which are spaced from the filling material (102) less than 10 mm.

12. Method according to claim 11,
wherein the step of injection molding comprises
mixing a material of the carrier element (101) with an inert gas, in particular nitrogen, for forming the gas bubbles (103),
introducing the material with the gas bubbles (103) in an injection molding tool (303),
wherein in particular a contact surface (107) of the carrier element (101) to the filling material (102) comprises a larger roughness than a corresponding surface of the injection molding tool (303),
wherein in particular the surface comprises a microstructure which is at least partially filled with the filling material (102),
especially preferred the filling material may adhere to fibers stubbles.

13. Method according to claim 12,
wherein in the step of mixing an inert gas, in particular nitrogen, is introduced with a gas pressure between 30 bar and 230 bar, in particular between 80 bar and 160 bar, such that the inert gas is shot into the material of the carrier element (101) in a shearing- and mixing zone.

14. Method according to claim 12 or 13,
wherein in the step of introducing the material of the carrier element (101) into the injection molding tool (303), a shot weight of maximum 1 kg is present.

15. Method according to one of the claims 12 to 14,
wherein in the step of mixing, the inert gas, in particular at least temporarily, is in a supercritical state.

## Revendications

1. Dispositif (100) permettant un coffrage étanche à l'humidité d'un composant électronique (110), le dispositif (100) comprenant
un élément de support (101) renforcé de fibres, moulé par injection, qui présente une cavité permettant d'accueillir le composant électronique (110), et qui est constitué d'une matière synthétique thermoplastique,
le composant électronique (110), qui est agencé dans la cavité,
une masse de remplissage (102) qui adhère à l'élément de support (101) et au composant électronique (110) et qui est agencée entre le composant électronique (110) et l'élément de support (101),
un conducteur électrique (104) qui est couplé au composant électronique (110) et à l'élément de support (101) et qui est au moins localement entouré par la masse de remplissage (102),
dans lequel l'élément de support (101) contient des bulles de gaz (103) qui sont situées à moins de 10 mm de la masse de remplissage (102).

2. Dispositif (100) selon la revendication précédente,
dans lequel la teneur en bulles de gaz est comprise entre 1 % et 30 % en volume, en particulier entre 2 % et 10 % en volume.

3. Dispositif (100) selon l'une quelconque des revendications précédentes,
dans lequel les bulles de gaz présentent une taille de pores comprise entre 10 et 50 microns.

4. Dispositif (100) selon l'une quelconque des revendications précédentes,
dans lequel l'élément de support (101) présente une proportion de polypropylène ou est en particulier constitué majoritairement de polypropylène,
dans lequel en particulier le conducteur électrique (104) pénètre la surface de l'élément de support (101) de telle manière que ladite pénétration se produit dans une surface de contact (107) de l'élément de support (101) par rapport à la masse de remplissage (102),
dans lequel les bulles de gaz (103) sont formées à moins de 10 mm, en particulier à moins de 4 mm, en particulier à moins de 2 mm, du conducteur électrique (104),
dans lequel les bulles de gaz (103) contiennent en particulier des gaz inertes, en particulier de l'azote.

5. Dispositif (100) selon l'une quelconque des revendications précédentes,
dans lequel la surface de contact (107) de l'élément de support (101) dans la région de contact par rapport à la masse de remplissage (102) présente des fibres de renforcement (106) exposées et/ou des cavités microcristallines.

6. Dispositif (100) selon l'une quelconque des revendications précédentes,
dans lequel l'élément de support (101) présente au moins deux régions (108, 109) avec des concentrations différentes de la densité de bulles de gaz.

7. Dispositif (100) selon l'une quelconque des revendications précédentes,
dans lequel l'élément de support (101) présente, au sein d'une surface de contact (107) par rapport à la masse de remplissage (102), différents coefficients de frottement statique dans différentes directions le long de la surface de contact (107).

8. Dispositif (100) selon l'une quelconque des revendications précédentes, présentant en outre au moins une des caractéristiques ci-dessous :
l'élément de support (101) présente une surface de contact (107) par rapport à la masse de remplissage (102),
la surface de contact (107) est structurée et présente en particulier une surface ondulée et/ou une surface rainurée,
la cavité de l'élément porteur (101) présente une ouverture à travers laquelle une région saillante du composant électronique (110) fait saillie dans l'environnement,
au moins une région comprenant de la masse de remplissage (102) est présente entre la région saillante et l'élément de support (101) de telle manière qu'une région intérieure du dispositif (100) est scellée de manière étanche aux fluides par rapport à un environnement du dispositif (100),
l'élément de support (101) présente au moins un élément de positionnement (105) contre lequel le composant électronique (110) s'appuie et peut être positionné, et
l'élément de positionnement (105) présente une cheville de guidage, un rail de guidage ou une piste de guidage au niveau duquel/de laquelle un élément de couplage correspondant du composant électronique (110) peut être couplé.

9. Dispositif (100) selon l'une quelconque des revendications précédentes, présentant en outre au moins une des caractéristiques ci-dessous :
l'élément de support (101) comprend un polymère présentant un indice de fluidité à chaud inférieur à 5 g/10 min, en particulier inférieur à 1 g/10 min,
l'élément de support (101) présente une teneur en fibres en pourcentage en poids comprise entre 5 % et 60 %, en particulier comprise entre 10 % et 50 %, et plus particulièrement comprise entre 15 % et 40 %,
l'élément de support (101) présente des fibres de renforcement (106) constituées de fibres minérales, en particulier de silicates, de verre, de basalte, d'amiante, de wollastonite, de fibres de carbone, en particulier de nanotubes de carbone, de fibres polymères, en particulier de fibres de polyamide, de fibres de polyimide, de polyester, de polyoléfines, de polyesteramides, d'aramides, en particulier de kevlar, et/ou de fibres naturelles, en particulier de cellulose, de coton, de viscose, de lyocell, de bois, de chanvre, de soie, et
les fibres de renforcement (106) présentent des fibres longues d'une longueur comprise entre 1 mm et 20 mm, en particulier comprise entre 5 mm et 15 mm.

10. Dispositif (100) selon l'une quelconque des revendications précédentes, présentant en outre au moins une des caractéristiques ci-dessous :
la masse de remplissage (102) comprend du polyuréthane ou de la résine époxy,
le conducteur électrique (104) est un conducteur plein,
le conducteur plein présente en particulier une section comprise entre 0,1 mm² et 10 mm²,
le conducteur électrique (104) menant au raccordement externe du composant électronique (110) passe à travers l'élément de support (101),
le conducteur électrique (104) est couplé électroniquement au composant électronique (110) par brasage, par soudage, par enfichage, en particulier d'un connecteur autodénudant, et/ou par coincement,
le composant électronique (110) est un microrupteur, un actionneur, une résistance ou un capteur, en particulier un capteur de température ou un capteur de distance, et
l'élément de support (101) pèse moins de 1 kg.

11. Procédé de fabrication d'un dispositif (100) selon l'une quelconque des revendications 1 à 10 permettant un coffrage étanche à l'humidité d'un conducteur (104) d'un composant électronique (110), le procédé comprenant les étapes consistant à
mouler par injection un élément de support (101) constitué d'une matière thermoplastique, renforcé de fibres et présentant une cavité permettant d'accueillir le composant électronique (110),
agencer le composant électronique (110) dans la cavité,
coupler un conducteur électrique (104) au composant électronique (110) et à l'élément de support (101),
remplir une masse de remplissage (102) entre le composant électronique (110) et l'élément de support (101),
dans lequel la masse de remplissage (102) adhère à l'élément de support (101) et au composant électronique (110),
dans lequel le conducteur électrique (104) est entouré au moins localement par la masse de remplissage (102),
dans lequel l'élément de support (101) contient des bulles de gaz (103) situées à moins de 10 mm de la masse de remplissage (102).

12. Procédé selon la revendication 11,
dans lequel l'étape de moulage par injection comprend les étapes consistant à
mélanger un matériau de l'élément de support (101) avec un gaz inerte, en particulier de l'azote, afin de former les bulles de gaz (103),
introduire le matériau comprenant les bulles de gaz (103) dans un moule d'injection (303),
dans lequel une surface de contact (107) de l'élément porteur (101) par rapport à la masse de remplissage (102) présente en particulier une rugosité supérieure à celle d'une surface correspondante du moule d'injection (303),
dans lequel la surface présente en particulier une microstructuration qui est au moins partiellement remplie avec la masse de remplissage (102),
dans lequel la masse de remplissage peut de manière particulièrement préférée adhérer aux bourres de fibres.

13. Procédé selon la revendication 12,
dans lequel, lors de l'étape de mélange, un gaz inerte, en particulier de l'azote, est introduit avec une pression de gaz comprise entre 30 bars et 230 bars, en particulier comprise entre 80 bars et 160 bars, de sorte que le gaz inerte est injecté dans le matériau de l'élément de support (101) dans une zone de cisaillement et de mélange.

14. Procédé selon la revendication 12 ou 13,
dans lequel une capacité d'injection d'au plus 1 kg est mise en œuvre lors de l'étape d'introduction du matériau de l'élément de support (101) dans le moule d'injection (303).

15. Procédé selon l'une quelconque des revendications 12 à 14,
dans lequel le gaz inerte se trouve dans un état supercritique, en particulier au moins temporairement, lors de l'étape de mélange.
